# FASCICULE DE BREVET EUROPEEN

(11) **EP 4 323 667 B1**
(45) Date de publication et mention de la délivrance du brevet: **29.01.2025**
(21) Numéro de dépôt: 22725367.1
(22) Date de dépôt: 08.04.2022
(51) Int. Cl.: F16D 65/00

(54) **COUVERCLE POUR GROUPE MOTORÉDUCTEUR POUR ACTIONNEUR ÉLECTRIQUE DE FREIN À DISQUE ET GROUPE MOTORÉDUCTEUR COMPRENANT UN TEL COUVERCLE**
DECKEL FÜR GETRIEBEMOTORGRUPPE FÜR EINEN ELEKTRISCHEN AKTOR EINER SCHEIBENBREMSE UND GETRIEBEMOTORGRUPPE EINSCHLIESSEND EINES DERARTIGEN DECKELS
CAP FOR GEAR MOTOR FOR DISC BRAKE ELECTRIC ACTUATOR AND GEAR MOTOR GROUP COMPRISING SAID CAP

(30) Priorité: 12.04.2021 FR 2103756
(43) Date de publication de la demande: 21.02.2024
(73) Titulaire: Hitachi Astemo France, 93700 Drancy (FR)
(72) Inventeur: BRIANE, Nicolas, 49800 TRELAZE (FR); QUAZUGUEL, Gaëtan, 93500 PANTIN (FR); LENOIR, Jordane, 49000 ANGERS (FR)
(74) Mandataire: IPAZ
(86) Numéro de dépôt international: PCT/EP2022/059369
(87) Numéro de publication internationale: WO 2022/218839

(56) Documents cités:
- EP-A1- 2 824 785
- DE-A1- 102009 060 203
- FR-A1- 3 053 422
- FR-A1- 3 074 757
- US-A- 4 444 071
- US-A1- 2015 330 467
- US-A1- 2019 229 587
- US-A1- 2019 252 944

## Description

L'invention se rapporte à un groupe motoréducteur électrique monté en bout d'un actionneur d'un frein à disque, qui comporte un moteur monté en porte-à-faux, parallèlement à la sortie du réducteur et du même côté.

### Etat de la technique

Dans le domaine des freins, pour l'automobile en général, et plus particulièrement les freins à disque, il est devenu courant d'implanter un actionneur électrique directement sur le frein. Cet actionneur est en général utilisé pour la fonction de frein de stationnement et de secours, mais parfois aussi en tant que frein de service.

Cet actionneur est motorisé, de façon générale, par un groupe motoréducteur électrique (ou MGU ou « Motor Gear Unit »), qui comporte un dispositif d'entrainement (ou moteur) et un dispositif de transmission (ou mécanisme de réduction), les deux dispositifs étant reliés entre eux (le moteur actionnant le dispositif de transmission) et étant enfermé dans un carter de protection comprenant d'une part un boîtier ouvert et d'autre part un couvercle de fermeture.

Le boîtier ouvert présente une section dont la forme épouse sensiblement la forme extérieure de l'ensemble formé par les deux dispositifs reliés ensemble. Le couvercle présente également la forme de la section du boîtier et est fixé sur le boîtier par soudure.

Le dispositif de transmission comporte plusieurs étages d'engrenages liés les uns aux autres, et notamment un engrenage planétaire (pouvant comporter deux étages) comprenant au moins une couronne dentée avec une denture interne.

On connait du document FR 3 074 757 un groupe motoréducteur de freinage qui comprend au moins deux trains épicycloïdaux, formant des étages de réduction montés en série, enfermés dans un boitier ou carter de protection.

Avec l'évolution des groupes motoréducteurs, la fabrication de pièces comportant ces couronnes a dû changer : elles doivent désormais être réalisées en métal et être rapportées dans le boîtier, au lieu d'être moulées dans le boîtier comme c'était fait auparavant.

Typiquement, le boîtier présente des nervures saillantes et la couronne est emmanchée à force dans le boîtier pour y être maintenue : en étant comprimées contre la couronne, ce sont ainsi les nervures qui maintiennent en position la ou les couronnes dans le boîtier.

Or, en forçant l'emmanchement des pièces dans les boîtiers, il a été constaté que des copeaux pouvaient se détacher des pièces, ce qui pouvait être gênant pour l'entrainement en rotation des engrenages.

Il a également été constaté que cette solution, alliant nervures et emmanchement serré, pouvait être à l'origine de génération de bruits au niveau du boîtier.

### Exposé de l'invention

L'invention vise donc à proposer une solution alternative pour assurer le maintien de la couronne dans le boîtier, sans génération de copeaux dans le boîtier risquant d'endommager les engrenages ou de compromettre leur fonctionnement.

A cet effet, l'invention se rapporte à un couvercle pour groupe motoréducteur pour actionneur électrique de frein, notamment à disque, ledit groupe motoréducteur comportant un boîtier renfermant un moteur électrique et un mécanisme de réduction connecté mécaniquement audit moteur électrique pour fournir en sortie dudit mécanisme de réduction un entrainement en rotation d'un arbre selon un axe de sortie, ledit mécanisme de réduction comprenant un système d'engrenage épicycloïdal comprenant des pignons satellites engrenant la surface intérieure d'une couronne dentée fixe en rotation, laquelle est rapportée dans un logement de boîtier et présente un axe de couronne définissant une direction axiale, ledit boîtier présentant une ouverture d'accès audit logement, permettant d'y introduire axialement ledit système d'engrenage ou au moins ladite couronne dentée, ladite couronne dentée présentant un bord libre dirigé vers ladite ouverture d'accès.

Conformément à l'invention, le couvercle est conçu pour venir fermer l'ouverture d'accès, et est remarquable en ce qu'il comporte une saillie axiale, notamment une jupe interne, apte à se positionner au moins partiellement en appui sur le bord libre de ladite couronne quand le couvercle ferme ladite ouverture, ladite saillie présentant, sur une extrémité libre en vis-à-vis du bord libre de la couronne, au moins un élément élastiquement déformable apte à venir en appui au moins partiellement contre le bord libre de la couronne, de sorte à maintenir ladite couronne dans le boîtier suivant ladite direction axiale.

Ainsi réalisée, la couronne est maintenue axialement par le couvercle. Il est alors possible d'assembler la couronne dans le boîtier en un emmanchement libre, ou glissant. On évite ainsi les contraintes et inconvénients de l'emmanchement à force, notamment la nécessité d'utiliser une presse et le risque de formation de copeaux.

Suivant un mode de réalisation avantageux qui sera présenté par la suite, la saillie axiale comprend une jupe interne qui est élastiquement déformable et/ou qui comporte au moins trois plot déformables, saillants axialement et qui sont répartis autour de l'axe de sortie, notamment avec un écart entre eux d'au moins 60° voire au moins 80°.

En outre, lesdits au moins trois plots saillants sont équidistants ou sensiblement équidistants les uns des autres.

En outre encore, ledit élément élastiquement déformable est surmoulé sur l'extrémité libre de ladite saillie axiale.

Suivant un mode de réalisation avantageux envisagé par l'invention, ladite saillie axiale est réalisée au moins partiellement d'une seule pièce avec le couvercle.

Suivant une variante de réalisation, ladite saillie axiale est rapportée sur ledit couvercle par assemblage.

En outre, ladite saillie axiale forme une jupe interne qui est réalisée en élastomère et constitue au moins partiellement ledit élément élastiquement déformable.

L'invention se rapporte également à un groupe motoréducteur pour actionneur électrique de frein à disque, ledit groupe motoréducteur comportant un boîtier renfermant un moteur électrique et un mécanisme de réduction connecté mécaniquement audit moteur électrique pour fournir en sortie dudit mécanisme de réduction un entrainement en rotation d'un arbre selon un axe de sortie, ledit mécanisme de réduction comportant un système d'engrenage à roues dentées et une couronne accueillant au moins partiellement ledit système d'engrenage et présentant un axe de couronne définissant une direction axiale, ladite couronne de protection présentant un bord libre de couronne, ledit boîtier présentant une ouverture d'accès audit système d'engrenage et à ladite couronne. Suivant l'invention, le groupe motoréducteur est remarquable en ce qu'il comporte un couvercle tel que défini ci-avant, ledit couvercle fermant ladite ouverture d'accès.

Conformément à un mode de réalisation de l'invention, la jupe interne du couvercle (du groupe motoréducteur) présente une section dont la forme est sensiblement la même que la forme de la section de la couronne, de sorte que le bord libre de la couronne se positionne en face de l'extrémité libre de la jupe interne du couvercle quand le couvercle est positionné sur le boîtier, pour exercer un appui sur l'ensemble du bord libre de la couronne.

Avantageusement, ladite couronne, le boîtier recevant ladite couronne et ladite jupe interne du couvercle sont chacun au moins partiellement cylindriques.

Encore avantageusement, le logement de boîtier et la couronne dentée interagissent entre eux par coopération de forme, notamment par des reliefs complémentaires entre eux formés autour de la couronne pour bloquer en rotation ladite couronne dans ledit logement de boîtier.

Dans le cadre de ce mode de réalisation, ladite couronne comporte une surface externe qui présente au moins un premier élément saillant, ledit boîtier comportant une surface interne présentant au moins un second élément saillant, ledit au moins un premier élément saillant de ladite couronne étant apte à venir en prise avec ledit au moins un second élément saillant dudit boîtier.

L'invention se rapporte également à un frein de véhicule, notamment à disque, comprenant un groupe motoréducteur électrique tel que défini ci-dessus ou un groupe motoréducteur comprenant un couvercle tel que défini ci-avant, qui entraîne un actionneur électrique de freinage, notamment de stationnement.

Enfin, l'invention se rapporte à un procédé d'assemblage d'un couvercle tel que défini ci-avant sur une ouverture d'accès de boîtier d'un groupe motoréducteur tel que défini ci-avant.

Suivant l'invention, le procédé est remarquable en ce qu'il comporte les étapes suivantes :
- positionnement de la couronne dans le logement de boîtier par emmanchement libre ou glissant (par exemple pour que ledit au moins un premier élément saillant vienne en prise avec ledit au moins un second élément saillant dudit boiter),
- positionnement du couvercle sur le boîtier, en appliquant ledit élément élastiquement déformable contre le bord libre de ladite couronne,
- application d'une pression sur le couvercle pour que ladite saillie axiale exerce sur la couronne une pression suivant la direction axiale de la couronne, et comprimant ainsi le ou les éléments élastiquement déformables,
- fixation du couvercle sur le boîtier, notamment par soudure ou collage.

Il est à noter que, même si le procédé prévoit un emmanchement libre, les vibrations sont évitées grâce à l'effet amortissant de (ou des) l'élément(s) élastiquement déformable(s) apte(s) à venir en appui au moins partiellement contre le bord libre de la couronne, de sorte à maintenir ladite couronne dans le boîtier suivant ladite direction axiale.

### Présentation des figures

D'autres avantages et caractéristiques de l'invention apparaîtront à l'examen de la description détaillée d'un mode de mise en oeuvre nullement limitatif, et des dessins annexés, sur lesquels :
[Fig.1] est une vue en perspective d'un groupe motoréducteur conforme à l' invention,
[Fig.2] est une vue en perspective d'un couvercle pour groupe motoréducteur conforme à l'invention,
[Fig.3] est une vue en perspective d'un couvercle et d'une couronne dentée que comporte le groupe motoréducteur illustré en [Fig.1], et
[Fig.4] est une vue en perspective et partiellement éclatée d'une partie du groupe motoréducteur montré en [Fig.1], montrant un couvercle conforme à l'invention, positionné au-dessus de pignons satellites engrenant la surface intérieure de la couronne dentée montrée en [Fig.3], la couronne dentée étant positionnée en-dessous des pignons afin de les découvrir.

### Description d'un mode de réalisation

Les termes « supérieur », « inférieur », « gauche », « droite », « haut », « bas » etc. sont utilisés dans la description qui va suivre uniquement pour que le lecteur se repère sur les figures : il devra être compris que ces termes ne sont pas des limitations de l' invention.

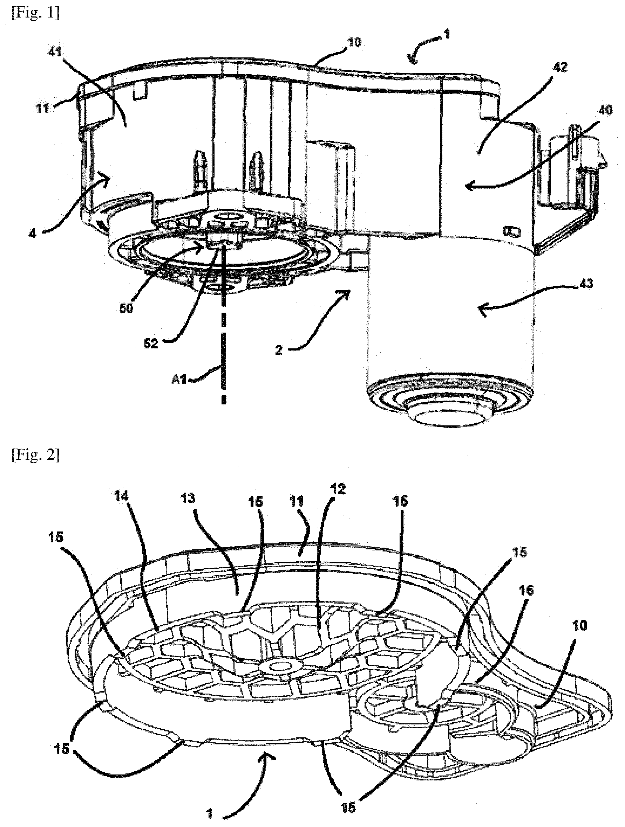

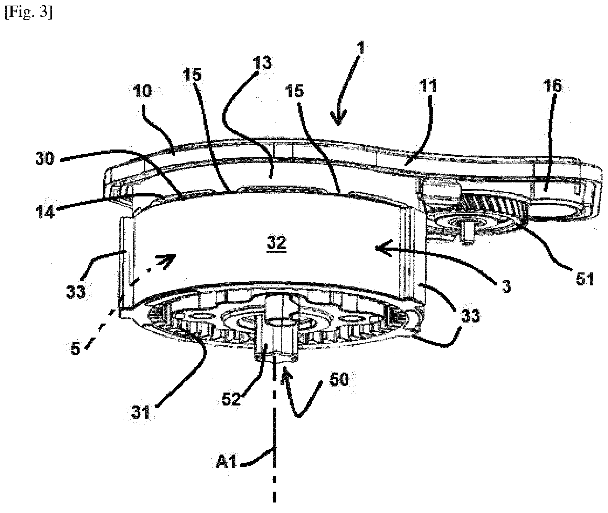

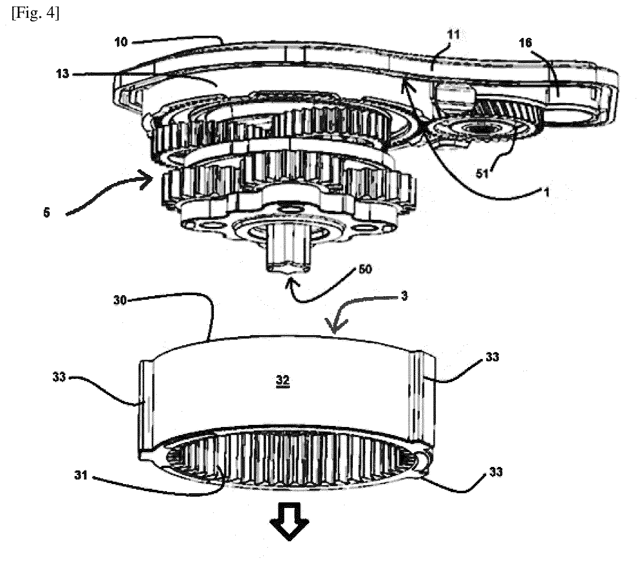

Un couvercle 1 faisant l'objet de l'invention est montré seul en [Fig.2]. Sur les figures 1, 3 et 4, respectivement, il est monté dans un groupe motoréducteur 2, ou il est représenté associé avec une couronne dentée 3 telle que positionnée dans le groupe motoréducteur ([Fig.3]) ou en position écartée de la couronne dentée 3 ([Fig.4]).

Le couvercle 1 montré sur les figures est conçu pour maintenir en position la couronne 3 dans le groupe motoréducteur : il convient donc de présenter, dans un premier temps, quels sont les éléments compris dans le groupe motoréducteur 2 et leur agencement, de manière à identifier la zone du groupe motoréducteur 2 où le couvercle 1 conforme à l'invention est mis en oeuvre.

La [Fig.1] montre le groupe motoréducteur 2 dans son ensemble, le couvercle 1 étant visible sur la partie supérieure groupe motoréducteur 2.

Le groupe motoréducteur 2 est conçu pour un actionneur de frein à disque, de type comportant un étrier mobile monté coulissant sur une chape, l'actionneur entrainant en déplacement l'étrier sous l'action du groupe motoréducteur ou d'un piston hydraulique.

La [Fig.1] montre un exemple d'un tel groupe motoréducteur et l'on observe qu'il comporte un boîtier 4, formant un carter de protection pour le groupe motoréducteur 2, le boîtier 4 présentant deux parties :
- une partie supérieure 40, présentant sensiblement une section en forme de haricot, accueillant deux formes cylindriques : une première forme cylindrique 41 située à gauche dans la partie supérieure 40 sur la [Fig.1] et une seconde forme cylindrique 42 située à droite dans la partie supérieure 40 sur la [Fig.1],
- une partie inférieure 43, formée par la seconde forme cylindrique qui est saillante vers le bas et qui s'étend sur une hauteur sensiblement identique à la hauteur de la partie supérieure 40.

La partie inférieure 43 prolonge, en réalité, la seconde forme cylindrique 42 vers le bas qui accueille un moteur électrique (non illustré) du groupe motoréducteur 2.

Le groupe motoréducteur 2 comporte également un mécanisme de réduction 5 (voir [Fig.3]) dont la sortie 50 est visible et correspond à la première forme cylindrique 41 en partie basse de la partie supérieure 40 du boîtier.

Le mécanisme de réduction 5 est connecté mécaniquement au moteur électrique, au moyen d'un pignon 51 montré notamment en figures 3 et 4, le pignons d'engrenage étant situé en partie supérieure de la partie 40 de la forme cylindrique 42 du boîtier 4.

Le mécanisme de réduction 5 comprend un système d'engrenage épicycloïdal comprenant des pignons satellites visibles surtout en [Fig.4], engrenant l'intérieur de la couronne dentée 3 (voir [Fig.3]) (les dents de certains pignons sont engagées entre les dents de la surface intérieure de la couronne dentée 3).

Il est à noter que la couronne dentée 3 est montée fixe en rotation dans le boîtier 4.

La couronne 3 est rapportée dans un logement du boîtier 4, se trouvant dans la forme cylindrique 41 de la partie supérieure 40 du boîtier 4.

On note sur la [Fig.3] que la sortie 50 du mécanisme de réduction présente un arbre 52 qui s'étend suivant un axe de sortie A1.

L'axe de sortie A1 correspond à l'axe de la couronne 3 et il définit une direction axiale.

L'arbre 52 permet de commander l'actionneur à l'origine du mouvement de l'étrier du piston du frein à disque (actionneur et frein à disque non illustrés) typiquement du type vis- écrou.

La partie supérieure 40 du boîtier 4 présente une ouverture d'accès qui est fermée par le couvercle 1 conforme à l'invention.

L'ouverture d'accès permet d'introduire axialement dans le boîtier 4 au moins le système d'engrenage 5 et la couronne dentée 3.

La partie inférieure 43 du boîtier 4, qui accueille au moins partiellement le moteur électrique 4, est également fermée.

Les figures 3 et 4 montrent que la couronne 3 présente un bord libre 30 qui est dirigé vers l'ouverture d'accès du boîtier 4 (et donc vers le couvercle 1 conforme à l'invention fermant l'ouverture d'accès).

La couronne 3 est de forme générale cylindrique, présentant une surface interne dentée 31 et une surface externe 32 qui présente trois éléments 33 saillants radialement vers l'extérieur et s'étendant chacun suivant une direction parallèle à la direction axiale A1. Les éléments 33 saillants sont équidistants les uns des autres.

L'intérieur du boîtier 4 qui accueille la couronne 3 est cylindrique et comporte une surface interne de boîtier qui présente également des éléments saillants vers l'intérieur, ces éléments saillants internes venant en prise avec les éléments 33 saillants de la couronne lorsqu'elle est accueillie dans le boîtier 4 : de cette façon, la couronne 3 est bloquée en rotation dans son logement d'accueil du boîtier 4 lorsqu'elle s'y trouve.

Ainsi, le logement du boîtier 4 et la couronne dentée 3 interagissent entre eux par coopération de forme, notamment par des reliefs complémentaires entre eux formés notamment autour de la couronne 3 (éléments saillants de l'intérieur du boîtier et ceux de la surface externe de la couronne 3).

Il va maintenant être fait plus particulièrement référence au couvercle 1 conforme à l'invention.

Le couvercle 1 comporte une paroi de fond 10 et une jupe périphérique 11, bordant la paroi de fond 10, venant au droit de la paroi extérieure du boîtier 4 quand le couvercle 1 est posé et fixé par soudure sur le boîtier 4.

La paroi de fond 10 comporte des éléments saillants formant une structure 12 en nid d'abeille (voir [Fig.2]), qui a pour fonction de limiter les vibrations du couvercle 1 (la paroi de fond 10 se comportant comme une peau vibrante).

Le couvercle 1 présente une forme similaire à la forme de la section transversale du boîtier 4.

Conformément à l'invention, le couvercle 1 comporte également une saillie axiale (c'est-à-dire dont l'axe vient se confondre avec l'axe A1 quand le couvercle est positionné sur l'ouverture d'accès du boîtier 4).

La saillie axiale est, dans le cadre de l'exemple illustré sur les figures, une jupe interne 13, qui vient se positionner au moins partiellement en appui sur le bord libre 30 de la couronne 3 quand le couvercle 1 ferme l'ouverture d'accès du boîtier 4 (voir [Fig.3]).

La jupe interne 13 (ou saillie axiale) présente une extrémité libre 14 en vis-à-vis du bord libre 30 de la couronne 3. Sur cette extrémité libre 14, la couronne comporte au moins un élément élastiquement déformable 15 qui est réalisé, dans le cadre de l'exemple illustré, par huit plots élastiquement déformables 15.

Les huit plots 15 sont saillants axialement de l'extrémité libre 14 de la jupe interne 13 et ils viennent en appui contre le bord libre 30 de la couronne 3 (voir [Fig.3]) pour maintenir la couronne 3 dans le boîtier 4 suivant la direction axiale A1.

La couronne 3 étant ainsi maintenue axialement par le couvercle 1 et il est possible d'assembler la couronne 3 dans le boîtier en un emmanchement libre, ou glissant : on évite ainsi les contraintes et inconvénients de l'emmanchement à force prévu dans l'Etat de la Technique évoqué précédemment, notamment la nécessité d'utiliser une presse et le risque de formation de copeaux pouvant gêner le bon fonctionnement du groupe motoréducteur.

La jupe interne 13 est au moins partiellement cylindrique et les huit plots 15 sont avantageusement répartis de façon équidistante et/ou équiangulaire autour de l'axe de sortie A1.

Il devra être compris que l'invention n'est pas limitée à la présence de huit plots et que l'on pourrait en prévoir davantage ou moins.

Dans le cadre d'un autre mode de réalisation, il pourrait être prévu au moins trois plots répartis autour de l'axe A1, notamment avec un écart entre eux d'au moins 60°, voire d'au moins 80°.

La forme de la jupe interne 13 est au moins partiellement cylindrique et présente une section dont la forme est sensiblement la même que la forme de la section de la couronne 3, de sorte que le bord libre 30 de la couronne 3 se positionne en face de l'extrémité libre 14 (la tranche) de la jupe interne 13 du couvercle 1, quand le couvercle 1 est positionné sur le boîtier 4, de manière à exercer un appui sur l'ensemble du bord libre 30 de la couronne 3.

En variante, la jupe 13 est élastiquement déformable avec les plots 15 : elle est, par exemple, réalisée en élastomère et constituerait au moins partiellement le ou les éléments élastiquement déformables conformément à l'invention.

En variante, sans sortir du cadre de l'invention, on surmoule les plots sur l'extrémité libre 14 de la jupe interne 13

En variante l'élément élastiquement déformable est surmoulé sur l'extrémité libre des saillies axiales, c'est-à-dire l'extrémité libre des plots 15, sans sortir du cadre de l' invention.

Les saillies axiales, ou plots 15, sont :
- soit réalisé(e)s d'une seule pièce avec la jupe 13,
- soit réalisé(e)s sur l'extrémité libre 14 du couvercle en étant rapporté(e)s sur cette extrémité libre.

Les figures 2 et 3 montrent également que le couvercle comporte en outre une seconde jupe interne 16, formée par le contour partiel de deux anneaux entrelacés. La seconde jupe interne 16 vient se positionner par exemple autour de pignons situés en partie supérieur du boîtier, et notamment le pignon 51 dans l'exemple illustré sur les figures.

Il va maintenant être fait référence à un procédé d'assemblage du couvercle 1 sur le boîtier 4 du groupe motoréducteur 2.

Dans un premier temps, la couronne 3 est positionnée dans le logement de boîtier 4 par emmanchement libre ou glissant.

Puis, l'on positionne le couvercle 1 sur le boîtier 4, en appliquant les plots 15 élastiquement déformables contre le bord libre 30 de ladite couronne 3.

Une pression est alors appliquée sur le couvercle 1 pour que ladite saillie axiale (extrémité libre de la jupe interne) 14 exerce sur la couronne 3 une pression suivant la direction axiale A1 de la couronne et comprime ainsi le ou les plots 15 élastiquement déformables.

Enfin, le couvercle 1 est fixé sur le boîtier 4 notamment par soudure ou par collage.

On comprend de la description qui précède comment l'invention permet de maintenir en place la couronne 3 dans le boîtier 4 d'un groupe motoréducteur 2 sans emmanchement à force.

Il devra être compris que l'invention n'est pas limitée à la réalisation spécifiquement montrée sur les figures et décrite ci-dessus. L'invention s'étend à la mise en oeuvre de moyens équivalents et à la réalisation d'un frein (non illustré), tel qu'un frein à disque de véhicule comprenant un groupe motoréducteur électrique tel que décrit ci-dessus (par exemple) qui comprendrait un couvercle tel que celui montré et décrit ci-avant, ou comportant des caractéristiques équivalentes. Dans un tel cas de figure, le frein de véhicule conforme à l'invention est conçu pour entrainer un actionneur électrique de freinage, notamment de stationnement.

### Liste des documents cités

1 - couvercle
2 - groupe motoréducteur
3 - couronne dentée
4 - boîtier
5 - mécanisme de réduction
10 - paroi de fond
11 - jupe périphérique bordant la paroi de fond
12 - structure en nid d'abeille
13 - jupe interne
14 - extrémité libre de la jupe interne
15 - élément élastiquement déformable
16 - seconde jupe interne
30 - bord libre de la couronne
31 - surface interne dentée
32 - surface externe
33 - éléments saillants
40 - partie supérieure du boîtier
41 - première forme cylindrique
42 - seconde forme cylindrique
43 - partie inférieure
50 - sortie du mécanisme de réduction
51 - pignon de sortie de l'arbre moteur
52 - arbre de sortie du mécanisme de réduction
A1 - axe de sortie / direction axiale

## Revendications

1. Couvercle (1) pour groupe motoréducteur (2) pour actionneur électrique de frein, notamment à disque, ledit groupe motoréducteur (2) comportant un boîtier (4) renfermant un moteur électrique et un mécanisme de réduction (5) connecté mécaniquement audit moteur électrique pour fournir en sortie (50) dudit mécanisme de réduction (5) un entrainement en rotation d'un arbre (52) selon un axe de sortie, ledit mécanisme de réduction (5) comprenant un système d'engrenage épicycloïdal comprenant des pignons satellites engrenant la surface intérieure (31) d'une couronne dentée (3) fixe en rotation, laquelle est rapportée dans un logement de boîtier (4) et présente un axe de couronne définissant une direction axiale (A1),
ledit boîtier (4) présentant une ouverture d'accès audit logement, permettant d'y introduire axialement ledit système d'engrenage ou au moins ladite couronne dentée (3),
ladite couronne dentée (3) présentant un bord libre (30) dirigé vers ladite ouverture d'accès,
ledit couvercle (1) étant conçu pour venir fermer l'ouverture d'accès, et étant
**caractérisé en ce qu'**il comporte une saillie axiale (13), notamment une jupe interne, apte à se positionner au moins partiellement en appui sur le bord libre (30) de ladite couronne (3) quand le couvercle (1) ferme ladite ouverture,
ladite saillie (13) présentant, sur une extrémité libre (14) en vis-à-vis du bord libre (30) de la couronne (3), au moins un élément élastiquement déformable (15) apte à venir en appui au moins partiellement contre ledit bord libre (30) de la couronne (3), de sorte à maintenir ladite couronne (3) dans le boîtier (4) suivant ladite direction axiale (A1).

2. Couvercle selon la revendication 1, **caractérisé en ce que** ladite saillie axiale (13) comprend une jupe (13) interne qui est élastiquement déformable et/ou qui comporte au moins trois plots élastiquement déformables (15), saillants axialement et qui sont répartis autour de l'axe de sortie, notamment avec un écart entre eux d'au moins 60° voire au moins 80°.

3. Couvercle selon la revendication 2, **caractérisé en ce que** lesdits au moins trois plots (15) saillants sont équidistants ou sensiblement équidistants les uns des autres.

4. Couvercle selon l'une quelconque des revendications précédentes, **caractérisé en ce que** ledit élément élastiquement déformable (15) est surmoulé sur l'extrémité libre (14) de ladite saillie axiale (13).

5. Couvercle selon l'une quelconque des revendications précédentes, **caractérisé en ce que** ladite saillie axiale (13) est réalisée au moins partiellement d'une seule pièce avec le couvercle (1).

6. Couvercle selon l'une quelconque des revendications 1 à 4, **caractérisé en ce que** ladite saillie axiale (13) est rapportée sur ledit couvercle (1) par assemblage.

7. Couvercle selon la revendication 6, **caractérisé en ce que** ladite saillie axiale (13) forme une jupe interne (13) qui est réalisée en élastomère et qui constitue au moins partiellement ledit élément élastiquement déformable (15).

8. Groupe motoréducteur (2) pour actionneur électrique de frein à disque, ledit groupe motoréducteur (2) comportant un boîtier (4) renfermant un moteur électrique et un mécanisme de réduction (5) connecté mécaniquement audit moteur électrique pour fournir en sortie (50) dudit mécanisme de réduction (5) un entrainement en rotation d'un arbre (52) selon un axe de sortie,
ledit mécanisme de réduction (5) comportant un système d'engrenage à pignons et une couronne (3) dentée accueillant au moins partiellement ledit système d'engrenage (5) et présentant un axe de couronne définissant une direction axiale (A1), ladite couronne (3) dentée présentant un bord libre (30) de couronne, ledit boîtier (4) présentant une ouverture d'accès audit système d'engrenage (5) et à ladite couronne (3), **caractérisé en ce qu'**il comporte un couvercle (1) selon l'une quelconque des revendications 1 à 7, ledit couvercle(1) fermant ladite ouverture d'accès.

9. Groupe motoréducteur selon la revendication 8, **caractérisé en ce que** la jupe interne (13) du couvercle (1) présente une section dont la forme est sensiblement la même que la forme de la section de la couronne (3), de sorte que le bord libre (30) de la couronne (3) se positionne en face de l'extrémité libre (14) de la jupe interne (13) du couvercle (1) quand le couvercle (1) est positionné sur le boîtier (4), pour exercer un appui sur l'ensemble du bord libre (30) de la couronne (3).

10. Groupe motoréducteur selon la revendication 8 ou 9, **caractérisé en ce que** ladite couronne (3), le boîtier (4) recevant ladite couronne (3) et ladite jupe interne (13) du couvercle (3) sont chacun au moins partiellement cylindriques.

11. Groupe motoréducteur selon la revendication 10 **caractérisé en ce que** le logement de boîtier (4) et la couronne dentée (3) interagissent entre eux par coopération de forme, notamment par des reliefs (33) complémentaires entre eux formés autour de la couronne (3) pour bloquer en rotation ladite couronne (3) dans ledit logement de boîtier (4).

12. Frein de véhicule, notamment à disque, comprenant un groupe motoréducteur (2) électrique selon l'une quelconque des revendications 8 à 11 ou un groupe motoréducteur (2) comprenant un couvercle (1) selon l'une des revendications 1 à 7, qui entraîne un actionneur électrique de freinage, notamment de stationnement.

13. Procédé d'assemblage d'un couvercle (1) selon l'une quelconque des revendications 1 à 7 sur une ouverture d'accès de boîtier (4) d'un groupe motoréducteur (2) selon l'une quelconque des revendications 8 à 11, **caractérisé en ce qu'**il comporte les étapes suivantes :
- positionnement de la couronne (3) dans le logement de boîtier (4) par emmanchement libre ou glissant,
- positionnement du couvercle (1) sur le boîtier (4), en appliquant ledit élément élastiquement déformable (15) contre le bord libre (30) de ladite couronne (3),
- application d'une pression sur le couvercle (1) pour que ladite saillie axiale (13) exerce sur la couronne (3) une pression suivant la direction axiale (A1) de la couronne, et
- fixation du couvercle (1) sur le boîtier (4), notamment par soudure ou collage.

## Patentansprüche

1. Deckel (1) für eine Getriebemotorgruppe (2) für einen elektrischen Aktuator einer Bremse, insbesondere einer Scheibenbremse, wobei die Getriebemotorgruppe (2) ein Gehäuse (4), das einen Elektromotor umschließt, und ein Untersetzungsgetriebe (5) aufweist, das mechanisch mit dem Elektromotor verbunden ist, um am Ausgang (50) des Untersetzungsgetriebes (5) einen Drehantrieb für eine Welle (52) um eine Ausgangsachse bereitzustellen,
wobei das Untersetzungsgetriebe (5) ein Planetengetriebesystem mit Planetenrädern umfasst, die mit der Innenfläche (31) eines drehfesten Hohlrads (3) kämmen, das in eine Aufnahme des Gehäuses (4) eingesetzt ist und eine Hohlradachse aufweist, die eine Axialrichtung (A1) definiert,
wobei das Gehäuse (4) eine Zugangsöffnung zu der Aufnahme aufweist, durch die das Getriebesystem oder zumindest das Hohlrad (3) axial eingeführt werden kann,
wobei das Hohlrad (3) einen freien Rand (30) aufweist, welcher der Zugangsöffnung zugewandt ist,
wobei der Deckel (1) dazu ausgelegt ist, die Zugangsöffnung zu verschließen und **dadurch gekennzeichnet ist, dass** er einen axialen Vorsprung (13), insbesondere eine innenliegende Schürze, umfasst, der bzw. die geeignet ist, sich zumindest teilweise in Abstützung an dem freien Rand (30) des Hohlrads (3) zu positionieren, wenn der Deckel (1) die Öffnung verschließt,
wobei der Vorsprung (13) an einem freien Ende (14), das dem freien Rand (30) des Hohlrads (3) gegenüberliegt, zumindest ein elastisch verformbares Element (15) aufweist, das geeignet ist, zumindest teilweise an den freien Rand (30) des Hohlrads (3) in Abstützung zu gelangen, so dass das Hohlrad (3) im Gehäuse (4) in der axialen Richtung (A1) gehalten wird.

2. Deckel nach Anspruch 1, **dadurch gekennzeichnet, dass** der axiale Vorsprung (13) eine innenliegende Schürze (13) umfasst, die elastisch verformbar ist und/oder die zumindest drei elastisch verformbare, axial vorstehende Noppen (15) umfasst, die um die Ausgangsachse verteilt angeordnet sind, insbesondere mit einem Abstand zwischen ihnen von mindestens 60° oder sogar mindestens 80°.

3. Deckel nach Anspruch 2, **dadurch gekennzeichnet, dass** die zumindest drei vorstehenden Noppen (15) in gleichem oder im Wesentlichen gleichem Abstand zueinander angeordnet sind.

4. Deckel nach einem der vorhergehenden Ansprüche, **dadurch gekennzeichnet, dass** das elastisch verformbare Element (15) an das freie Ende (14) des axialen Vorsprungs (13) angeformt ist.

5. Deckel nach einem der vorhergehenden Ansprüche, **dadurch gekennzeichnet, dass** der axiale Vorsprung (13) zumindest teilweise einstückig mit dem Deckel (1) ausgebildet ist.

6. Deckel nach einem der Ansprüche 1 bis 4, **dadurch gekennzeichnet, dass** der axiale Vorsprung (13) durch Fügen an den Deckel (1) angesetzt ist.

7. Deckel nach Anspruch 6, **dadurch gekennzeichnet, dass** der axiale Vorsprung (13) eine innenliegende Schürze (13) bildet, die aus Elastomer hergestellt ist und zumindest teilweise das elastisch verformbare Element (15) bildet.

8. Getriebemotorgruppe (2) für einen elektrischen Aktuator einer Scheibenbremse, wobei die Getriebemotorgruppe (2) ein Gehäuse (4), das einen Elektromotor umschließt, und ein Untersetzungsgetriebe (5) umfasst, das mechanisch mit dem Elektromotor verbunden ist, um am Ausgang (50) des Untersetzungsgetriebes (5) einen Drehantrieb für eine Welle (52) um eine Ausgangsachse bereitzustellen,
wobei das Untersetzungsgetriebe (5) ein Getriebesystem mit Zahnrädern und ein Hohlrad (3) umfasst, das das Getriebesystem (5) zumindest teilweise aufnimmt und eine Hohlradachse aufweist, die eine axiale Richtung (A1) definiert, wobei das Hohlrad (3) einen freien Hohlradrand (30) aufweist, wobei das Gehäuse (4) eine Zugangsöffnung zu dem Getriebesystem (5) und dem Hohlrad (3) aufweist, **dadurch gekennzeichnet, dass** sie einen Deckel (1) nach einem der Ansprüche 1 bis 7 aufweist, wobei der Deckel (1) die Zugangsöffnung verschließt.

9. Getriebemotorgruppe nach Anspruch 8, **dadurch gekennzeichnet, dass** die innenliegende Schürze (13) des Deckels (1) einen Querschnitt aufweist, dessen Form im Wesentlichen der Form des Querschnitts des Hohlrads (3) entspricht, so dass der freie Rand (30) des Hohlrads (3) sich gegenüber dem freien Ende (14) der innenliegenden Schürze (13) des Deckels (1) positioniert, wenn der Deckel (1) auf das Gehäuse (4) positioniert wird, um eine Druckkraft auf den gesamten freien Rand (30) des Hohlrads (3) auszuüben.

10. Getriebemotorgruppe nach Anspruch 8 oder 9, **dadurch gekennzeichnet, dass** das Hohlrad (3), das das Hohlrad (3) aufnehmende Gehäuse (4) und die innenliegende Schürze (13) des Deckels (3) jeweils zumindest teilweise zylindrisch sind.

11. Getriebemotorgruppe nach Anspruch 10, **dadurch gekennzeichnet, dass** die Aufnahme des Gehäuses (4) und das Hohlrad (3) formschlüssig zusammenwirken, insbesondere über zueinander komplementäre Erhebungen (33), die um das Hohlrad (3) herum ausgebildet sind, um das Hohlrad (3) drehfest in der Aufnahme des Gehäuses (4) festzulegen.

12. Fahrzeugbremse, insbesondere Scheibenbremse, mit einer elektrischen Getriebemotorgruppe (2) nach einem der Ansprüche 8 bis 11 oder einer Getriebemotorgruppe (2) mit einem Deckel (1) nach einem der Ansprüche 1 bis 7, die einen elektrischen Aktuator einer Bremse, insbesondere einer Feststellbremse, antreibt.

13. Verfahren zur Montage eines Deckels (1) nach einem der Ansprüche 1 bis 7 an eine Zugangsöffnung des Gehäuses (4) einer Getriebemotorgruppe (2) nach einem der Ansprüche 8 bis 11, **dadurch gekennzeichnet, dass** es die folgenden Schritte umfasst:
- Positionieren des Hohlrads (3) in der Aufnahme des Gehäuses (4) durch freies oder gleitend geführtes Einpressen,
- Positionieren des Deckels (1) an dem Gehäuse (4), indem das elastisch verformbare Element (15) an den freien Rand (30) des Hohlrads (3) angedrückt wird,
- Aufbringen einer Druckkraft auf den Deckel (1), so dass der axiale Vorsprung (13) einen Druck entlang der axialen Richtung (A1) des Hohlrads auf das Hohlrad (3) ausübt, und
- Befestigen des Deckels (1) an das Gehäuse (4), insbesondere durch Anschweißen oder Ankleben.

## Claims

1. Cover (1) for a motor gear unit (2) for an electric actuator for a brake, in particular a disc brake, said motor gear unit (2) comprising a housing (4) enclosing an electric motor and a reduction gear mechanism (5) mechanically connected to said electric motor to provide at the output (50) of said reduction gear mechanism (5) a rotational drive of a shaft (52) along an output axis,
said reduction gear mechanism (5) comprising an epicyclic gear system comprising planet gears meshing with the inner surface (31) of a toothed ring gear (3) fixed in rotation, which is mounted in a recess of the housing (4) and has a ring gear axis defining an axial direction (A1),
said housing (4) having an opening for access to said recess, making it possible to axially insert said gear system therein or at least said toothed ring gear (3),
said toothed ring gear (3) having a free edge (30) directed towards said access opening,
said cover (1) being designed to close the access opening, and being **characterized in that** it comprises an axial projection (13), in particular an inner skirt, capable of being positioned at least partially bearing against the free edge (30) of said ring gear (3) when the cover (1) closes said opening,
said projection (13) having on a free end (14) opposite the free edge (30) of the ring gear (3) at least one elastically deformable element (15) capable of at least partially bearing against said free edge (30) of the ring gear (3), so as to hold said ring gear (3) in the housing (4) in said axial direction (A1).

2. Cover according to claim 1, **characterized in that** said axial projection (13) comprises an inner skirt (13) that is elastically deformable and/or that comprises at least three axially projecting elastically deformable studs (15) that are distributed about the output axis, in particular with a gap between them of at least 60° or at least 80°.

3. Cover according to claim 2, **characterized in that** said at least three projecting studs (15) are equidistant or substantially equidistant from each other.

4. Cover according to any one of the preceding claims, **characterized in that** said elastically deformable element (15) is overmoulded on the free end (14) of said axial projection (13).

5. Cover according to any one of the preceding claims, **characterized in that** said axial projection (13) is produced at least partially in a single piece with the cover (1).

6. Cover according to any one of claims 1 to 4, **characterized in that** said axial projection (13) is mounted on said cover (1) by assembly.

7. Cover according to claim 6, **characterized in that** said axial projection (13) forms an inner skirt (13) that is produced from elastomer and that at least partially constitutes said elastically deformable element (15).

8. Motor gear unit (2) for an electric actuator for a disc brake, said motor gear unit (2) comprising a housing (4) enclosing an electric motor and a reduction gear mechanism (5) mechanically connected to said electric motor to provide at the output (50) of said reduction gear mechanism (5) a rotational drive of a shaft (52) along an output axis,
said reduction gear mechanism (5) comprising a pinion gear system and a toothed ring gear (3) at least partially accommodating said gear system (5) and having a ring gear axis defining an axial direction (A1), said toothed ring gear (3) having a free edge (30) of the ring gear, said housing (4) having an access opening to said gear system (5) and to said ring gear (3) **characterized in that** it comprises a cover (1) according to any one of claims 1 to 7, said cover (1) closing said access opening.

9. Motor gear unit according to claim 8, **characterized in that** the inner skirt (13) of the cover (1) has a cross section the shape of which is substantially the same as the shape of the cross section of the ring gear (3), so that the free edge (30) of the ring gear (3) is positioned opposite the free end (14) of the inner skirt (13) of the cover (1) when the cover (1) is positioned on the housing (4), in order to bear on the entire free edge (30) of the ring gear (3).

10. Motor gear unit according to claim 8 or 9, **characterized in that** said ring gear (3), the housing (4) receiving said ring gear (3) and said inner skirt (13) of the cover (3) are each at least partially cylindrical.

11. Motor gear unit according to claim 10, **characterized in that** the recess of the housing (4) and the toothed ring gear (3) interact with each other by cooperation of shape, in particular by mutually complementary reliefs (33) formed around the ring gear (3) to lock said ring gear (3) in rotation in said recess of the housing (4).

12. Vehicle brake, in particular a disc brake, comprising an electric motor gear unit (2) according to any one of claims 8 to 11 or a motor gear unit (2) comprising a cover (1) according to any one of claims 1 to 7, which drives an electric braking actuator, in particular for parking.

13. Method for assembling a cover (1) according to any one of claims 1 to 7, onto an access opening of a housing (4) of a motor gear unit (2) according to any one of claims 8 to 11, **characterized in that** it comprises the following steps:
- positioning the ring gear (3) in the recess of the housing (4) via free or sliding fit,
- positioning the cover (1) on the housing (4), by applying said elastically deformable element (15) against the free edge (30) of said ring gear (3),
- applying a pressure on the cover (1) so that said axial projection (13) exerts a pressure on the ring gear (3) in the axial direction (A1) of the ring gear, and
- fastening the cover (1) onto the housing (4), in particular by welding or bonding.
